# EUROPÄISCHE PATENTSCHRIFT

(11) **EP 3 433 582 B1**
(45) Veröffentlichungstag und Bekanntmachung des Hinweises auf die Patenterteilung: **16.09.2020**
(21) Anmeldenummer: 17714634.7
(22) Anmeldetag: 09.03.2017
(51) Int. Cl.: G01D 5/14, G06F 3/0346

(54) **VORRICHTUNG ZUR EINGABE VON ABSOLUTER POSITION UND AUSRICHTUNG EINES EINGABEELEMENTES**
APPARATUS FOR INPUTTING ABSOLUTE POSITION AND ORIENTATION OF AN INPUT ELEMENT
DISPOSITIF D'ENTRÉE DE POSITION ABSOLUE ET D'ORIENTATION D'UN ÉLÉMENT D'ENTRÉE

(30) Priorität: 24.03.2016 DE 102016105600
(43) Veröffentlichungstag der Anmeldung: 30.01.2019
(73) Patentinhaber: Verein zur Förderung von Innovationen durch Forschung, Entwicklung und Technologietransfer e.V. (Verein INNOVENT e.V.), 07745 Jena (DE)
(72) Erfinder: HOLZHEY, Rocco, 07749 Jena (DE); WANGEMANN, Sebastian, 07745 Jena (DE)
(74) Vertreter: Oehmke, Volker
(86) Internationale Anmeldenummer: PCT/DE2017/100184
(87) Internationale Veröffentlichungsnummer: WO 2017/162231

(56) Entgegenhaltungen:
- DE-A1- 3 708 104
- US-A1- 2014 184 505
- US-A1- 2015 025 761

## Beschreibung

Die Erfindung betrifft die Eingabe von absoluter Position und Ausrichtung sowie Verschiebungen und Drehungen eines Elementes im dreidimensionalen Raum in einen Computer.

Zur Eingabe von Verschiebungen und Drehungen gibt es bereits verschiedene Geräte. Bekannt sind beispielsweise 3D-Mäuse, in denen verschiedene Sensoren derart platziert sind, dass durch Drücken oder Verdrehen einer Kugel Verschiebungen und Drehungen im dreidimensionalen Raum beschrieben werden. Die Verschiebungs- und Drehgeschwindigkeit werden in solchen Systemen entweder durch die Messung der Verschiebungsstrecke bzw. den Drehwinkel relativ zu einer Ruhelage oder durch die Messung der Schub- und Drehkräfte bestimmt. Die gesamte Verschiebungsstrecke und der gesamte Drehwinkel werden anschließend durch die Dauer des Drückens oder Verdrehens der Kugel bestimmt. Solche Verfahren haben mehrere Nachteile. Einerseits können nur relative Verschiebungen und Drehungen bestimmt werden. Eine Bestimmung von absoluter Position und Orientierung im dreidimensionalen Raum ist nicht möglich. Weiterhin ist die zur Eingabe verwendete Kugel mit dem Eingabegerät mehr oder weniger fest verbunden und kann nur in einem geringen Bereich gedrückt oder gedreht werden. Hierdurch sind sowohl der erreichbare Wertebereich als auch die erreichbare Genauigkeit bei der Bestimmung der Verschiebungs- bzw. Drehgeschwindigkeit begrenzt.
Als Folge wird auch die daraus berechnete Verschiebung bzw. Drehung nur ungenau beschrieben. Eine Kontrolle und Korrektur der Verschiebung bzw. Drehung erfolgt durch den Nutzer des Eingabegerätes durch entsprechende Gegenbewegungen.
Ein weiterer Nachteil bisheriger 3D-Eingabegeräte ist, dass diese natürliche Bewegungen, wie das Führen eines Stiftes oder eines Werkzeugs aufgrund der Einschränkungen in der räumlichen Bewegungsfreiheit nicht abbilden können.
Mit der DE 37 08 104 A1 wird eine Positionsmessvorrichtung vorgestellt, bei der die räumliche Position eines als Positionsindikator verwendeten Permanentmagneten bezüglich in einer Fläche angeordneten magnetoresistiven Sensoren detektierbar ist. Durch die US 2015/0025761 A1 wird eine Vorrichtung mit einem Magnetfeldsensor und einer Betätigungsvorrichtung für ein Fahrzeug sowie ein Verfahren zur Bestimmung einer Relativposition zwischen einer ersten Komponente und einer zweiten Komponente offenbart.
Mit der US 2014/0184505 A1 wird ein System zum Überwachen der Bewegung eines oder mehrerer außerhalb einer Vorrichtung befindlicher Magnete unter Verwendung der Vektordaten von einem oder mehreren in der Vorrichtung enthaltenen Magnetvektorsensoren zum Bestimmen einer Position und/oder zum Übermitteln von Informationen beschrieben.
Der Erfindung liegt die Aufgabe zugrunde, eine Vorrichtung zur Eingabe von absoluter Position und Ausrichtung eines Eingabeelementes sowie von sechs Freiheitsgraden der Bewegung, nämlich drei Verschiebungen und drei Drehungen des Eingabeelements, in einen Computer zu schaffen, bei der die Verschiebungen und Drehungen des Eingabeelementes in einem großen Raumbereich direkt in Verschiebungen und Drehungen eines Elementes in einer Computersoftware umgesetzt werden. Erfindungsgemäß wird die Aufgabe mit einer Vorrichtung zur Eingabe von absoluter Position und Ausrichtung eines Eingabeelementes, enthaltend zwei Permanentmagnete, wobei das Eingabeelement im Wirkbereich von Sensoren frei bewegbar angeordnet ist, dadurch gelöst, dass die Dipolmomente der beiden Permanentmagnete des Eingabeelementes nicht kollinear zueinander orientiert angeordnet sind und die Sensoren zur Messung der magnetischen Flussdichte des von den beiden Permanentmagneten generierten Feldes in zwei zueinander orthogonalen Ebenen angeordnet sind, wobei in jeder Ebene mindestens drei Sensoren angeordnet sind. Hierbei kommen als Permanentmagnete herkömmliche NdFeB-Magnete zum Einsatz.
Die beiden Permanentmagnete sind vorteilhaft als Stabmagnete oder besonders vorteilhaft in Kugelform als Kugelmagnete ausgebildet.
Die beiden Permanentmagnete können dabei innerhalb des Eingabeelementes parallel, antiparallel oder orthogonal zueinander angeordnet werden. Auch eine unter einem Winkel stehende Anordung der beiden Permanentmagnete ist möglich.
Der Abstand zwischen den Permanentmagneten beträgt vorteilhaft mindestens das Doppelte der Summe der größten Abmaße der beiden Permanentmagneten.

Ein besonders vorteilhaft ausgestaltetes Eingabeelement besteht darin, dass es die Größe und die Form eines Tennisballes aufweist.
Grundsätzlich ist die Art der Anordnung der Sensoren in den beiden Ebenen irrelevant, jedoch ist es von Vorteil, wenn die Sensoren in den beiden Ebenen gleichmäßig verteilt angeordnet werden.
Als Sensoren können AMR-Sensoren verwendet werden.
Als vorteilhafte AMR-Sensoren können dreiachsige AMR-Kompasssensoren mit integriertem AD-Wandler und einem Messbereich bis 400 µT verwendet werden.
Alle Sensoren sind vorteilhaft über einen I2C-Bus mit einem Mikrocontroller verbunden. Der Mikrocontroller kann dabei per USB mit einem PC verbunden sein.

Die Erfindung wird nachfolgend anhand von Ausführungsbeispielen näher erläutert werden. In den dazugehörigen Zeichnungen zeigen:
- Fig. 1: eine schematische Darstellung eines Eingabeelementes im Wirkbereich der durch die Sensoren aufgespannten beiden Ebenen,
- Fig. 2: eine schematische Darstellung eines Eingabeelementes mit den Kugelmagneten in paralleler Anordnung,
- Fig. 3: eine schematische Darstellung eines Eingabeelementes mit den Kugelmagneten in antiparalleler Anordnung und
- Fig. 4: eine schematische Darstellung eines Eingabeelementes mit den Kugelmagneten in orthogonaler Anordnung.

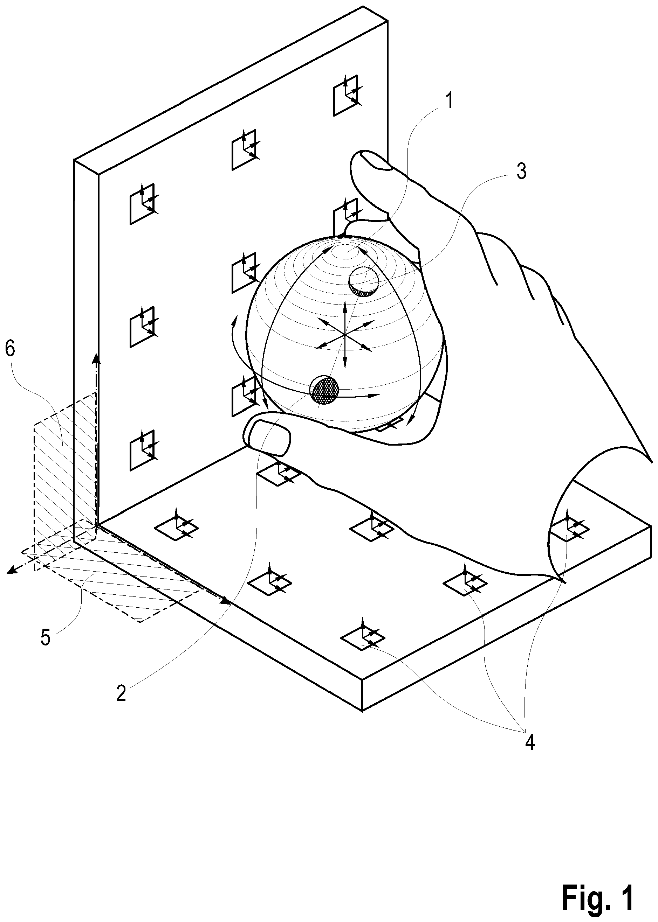

Als benutzerfreundliches Eingabeelement 1 wurde gemäß Fig. 1 eine Kugel ungefähr in der Größe eines Tennisballes gewählt. Somit kann das Eingabeelement 1 einhändig oder beidhändig bedient werden. Das Eingabeelement 1 ist ein rein passives Element und nicht mit den anderen Komponenten des Systems verbunden. Dadurch kann der Benutzer das Eingabeelement 1, welches gemäß Fig. 1 die Form eines Tennisballes annimmt, frei im Raum bewegen.

Für das Ortungsverfahren wird die magnetische Flussdichte an verschiedenen Raumpunkten in der Umgebung des Eingabeelementes 1 gemessen. Da das Magnetfeld eines magnetischen Permanentmagneten axialsymmetrisch ist, können durch die Ortung eines einzelnen magnetischen Permanentmagneten bzw. mehrerer kollinear orientierter Permanentmagnete nur fünf Freiheitsgerade im Raum, nämlich drei Verschiebungen und zwei Drehungen, beschrieben werden. Um den sechsten Freiheitsgrad, die Drehung um die Symmetrieachse, bestimmen zu können, muss die axiale Symmetrie gebrochen werden. Dies wird durch eine Anordnung zweier Permanentmagnete derart erreicht, dass ihre Dipolmomente nicht kollinear zueinander orientiert sind. Genauer wird eine orthogonale Anordnung der beiden Dipolmomente zueinander bevorzugt. Die absolute Position und Ausrichtung der beiden Permanentmagnete wird durch ein Ortungsverfahren ermittelt. Hierdurch sind auch die absolute Position und Orientierung des Eingabeelementes 1 eindeutig festgelegt. Weiterhin sind die Permanentmagnete in einem möglichst großen Abstand zueinander platziert, da so im Ortungsverfahren genauer die Position und Orientierung der beiden Permanentmagnete bestimmt werden kann. In das Ortungsverfahren gehen dabei als bekannte Größen der Abstand und die relative Orientierung der Permanentmagnete zueinander sowie die Beträge der magnetischen Dipolmomente der beiden Permanentmagnete ein. Für die Permanentmagnete sind in den Ausführungsbeispielen und Zeichnungen jeweils Kugelmagnete 2, 3 ausgewählt worden. Grundsätzlich sind jedoch alle Permanentmagnetformen möglich.
Wie aus Fig. 1 ersichtlich, sind die Sensoren 4 zur Messung der magnetischen Flussdichte des von den beiden Kugelmagneten 2, 3 generierten Feldes in zwei zueinander orthogonalen Ebenen 5, 6 angeordnet, wodurch der Bedienbereich festgelegt ist. Die Sensoren 4 werden möglichst gleichmäßig in den beiden Ebenen 5, 6 angeordnet, um eine gute räumliche Abdeckung zu erreichen. Die so gewählte Anordnung der Sensoren 4 erfasst das Magnetfeld der beiden Kugelmagneten 2, 3 des Eingabeelementes 1 räumlich signifikant besser gegenüber einer Sensoranordnung in nur einer Ebene 5 oder einer Ebene 6. Außerdem ist durch diese Anordnung das Eingabeelement 1 weiterhin gut für den Benutzer erreichbar und es ist möglich, das Eingabeelement 1 im Bereich vor und über den beiden Ebenen 5, 6 frei zu bewegen. Gemäß Fig. 1 wurden achtzehn Sensoren 4 angeordnet. Das sind mehr Sensoren 4 als zwingend notwendig, um die zwei Kugelmagneten 2, 3, deren Abstand, relative Orientierung und magnetische Momente bekannt sind, zu orten. Diese Redundanz hat mehrere Vorteile. Die Genauigkeit der Ortung wird verbessert. Einerseits gibt es immer mehrere Sensoren 4, die ein deutliches Messsignal liefern, während das Messsignal anderer Sensoren 4 aufgrund ihres Messbereiches möglicherweise bereits kleiner als das Rauschsignal ist. Außerdem mitteln sich statistische Fehler teilweise heraus. Zusätzlich bietet die Redundanz eine erhöhte Ausfallsicherheit.
Abhängig von der räumlichen Ausdehnung der Sensoranordnung sind zwei Konzepte zur Übersetzung von Verschiebungen des Eingabeelementes 1 auf Verschiebungen eines Elementes in einer Computersoftware möglich. Eine kompakte Ausführung der Sensoranordnung schränkt den freien Bewegungsbereich für das Eingabeelement 1 ein. In diesem Fall kann eine kleine Verschiebung des Eingabeelements 1 in eine Verschiebungsgeschwindigkeit für ein Element in einer Computersoftware übersetzt werden, wie es auch bei konventionellen 3D-Mäusen der Fall ist. Abhängig von der Dauer, in der sich das Eingabeelement 1 in einer bestimmten Position befindet, erfolgt eine Verschiebung eines Elementes in der Computersoftware um eine bestimmte Strecke. Da der freie Bewegungsbereich des Eingabeelementes 1 in dieser Erfindung selbst für kompakte Sensoranordnungen immer noch deutlich größer ist als bei herkömmlichen 3D-Mäusen, ist auch die erreichbare Genauigkeit der Verschiebungsgeschwindigkeit deutlich höher, was einen signifikanten Vorteil gegenüber herkömmlichen 3D-Mäusen darstellt. Für eine räumlich weiter ausgedehnte Variante der Sensoranordnung, eventuell auch mit mehr als achtzehn Sensoren 4, kann eine direkte Übersetzung von Verschiebungen des Eingabeelementes 1 auf Verschiebungen eines Elementes in einer Computersoftware mittels eines konstanten Skalierungsfaktors erfolgen. Der Vorteil dieser Variante gegenüber herkömmlichen 3D-Mäusen liegt in der deutlich genaueren, da direkten Übertragung von Strecken. Unabhängig von der Ausdehnung der Sensoranordnung und damit der Beschreibung von Verschiebungen werden Drehungen des Eingabeelementes 1 direkt erfasst und können somit direkt auf Drehungen eines Elementes in einer Computersoftware übertragen werden.
Für die Messung des von den beiden Kugelmagneten 2, 3 generierten Magnetfeldes werden AMR-Sensoren verwendet. Es ist darauf zu achten, dass Messbereich und Anordnung der Sensoren 4 sowie die verwendeten Kugelmagneten 2, 3 aufeinander abgestimmt sind. In der Ausführungsform gemäß Fig. 1 wurden Kugelmagneten 2, 3 mit einem magnetischen Moment von 0,150 Am² in das Eingabeelement 1 integriert. Als Sensoren 4 kommen kostengünstige dreiachsige AMR-Kompasssensoren mit integriertem AD-Wandler und einem Messbereich bis 400 µT zum Einsatz. Alle Sensoren 4 sind über einen I2C-Bus an einen Mikrocontroller angeschlossen, der wiederum per USB an den Computer des Nutzers angebunden wird. Der Mikrocontroller fragt die von den Sensoren erfasste magnetische Flussdichte ab und stellt die Werte für eine auf dem Computer ausgeführte Software zur Verfügung. Die Ortung des Eingabeelementes 1 läuft als Hintergrundprozess auf dem Nutzerrechner.
Wesentlich bei der Anordnung der beiden Kugelmagneten 2, 3 ist, dass sie deutlich räumlich getrennt sind. Der Abstand sollte mindestens das Doppelte der Summe der größten Abmaße der beiden Kugelmagneten 2, 3 betragen.

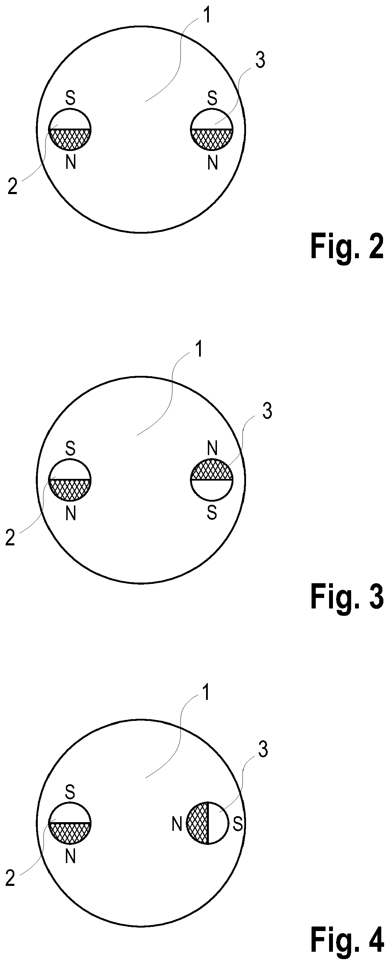

In den Figuren 2 bis 4 sind die grundsätzlichen drei möglichen Magnetanordnungen dargestellt. Fig. 2 zeigt dabei die parallele, Fig. 3 die antiparallele und Fig. 4 die orthogonale Anordnung der Kugelmagneten 2, 3 im Eingabeelement 1. Es wären aber auch jeweils von den parallelen, antiparallelen und orthogonalen Anordnungen abweichende, unter einem Winkel ungleich 180° bzw. 90° stehende Anordnungen möglich. Allein die Kenntnis der genauen Lage der Kugelmagneten 2, 3 ist Voraussetzung für Ortungsverfahren des Eingabeelementes 1. Im Übrigen ist jede andere vom Tennisball abweichende Form für das Eingabeelement 1 möglich.

### Bezugszeichenliste

- 1: Eingabeelement
- 2: Kugelmagnet
- 3: Kugelmagnet
- 4: Sensoren
- 5: Ebene
- 6: Ebene

## Patentansprüche

1. Vorrichtung zur Eingabe von absoluter Position und Ausrichtung eines Eingabeelementes (1) in einen Computer, das Eingabeelement (1) enthaltend zwei Permanentmagnete, wobei das Eingabeelement (1) im Wirkbereich von ebenfalls zur Vorrichtung gehörigen Sensoren (4) frei bewegbar angeordnet ist, **dadurch gekennzeichnet, dass**
- die Dipolmomente der beiden Permanentmagnete des Eingabeelementes (1) nicht kollinear zueinander orientiert angeordnet sind und
- die Sensoren (4) zur Messung der magnetischen Flussdichte des von den beiden Permanentmagneten generierten Feldes in zwei zueinander orthogonalen Ebenen (5, 6) angeordnet sind, wobei in jeder Ebene (5 bzw. 6) mindestens drei Sensoren (4) angeordnet sind.

2. Vorrichtung nach Anspruch 1, **dadurch gekennzeichnet, dass** die beiden Permanentmagnete als Stabmagnete oder als Kugelmagnete (2, 3) ausgebildet sind.

3. Vorrichtung nach Anspruch 2, **dadurch gekennzeichnet, dass** die beiden Stabmagnete oder Kugelmagnete (2, 3) parallel, antiparallel oder orthogonal zueinander angeordnet sind.

4. Vorrichtung nach Anspruch 3, **dadurch gekennzeichnet, dass** der Abstand zwischen den Stabmagneten oder Kugelmagneten (2, 3) mindestens das Doppelte der Summe der größten Abmaße der beiden Stabmagneten oder Kugelmagneten (2, 3) beträgt.

5. Vorrichtung nach Anspruch 1, **dadurch gekennzeichnet, dass** das Eingabeelement (1) die Größe und die Form eines Tennisballes aufweist.

6. Vorrichtung nach Anspruch 1, **dadurch gekennzeichnet, dass** die Sensoren (4) in den beiden Ebenen (5, 6) gleichmäßig verteilt angeordnet sind.

7. Vorrichtung nach Anspruch 1, **dadurch gekennzeichnet, dass** die Sensoren (4) AMR-Sensoren sind.

8. Vorrichtung nach Anspruch 7, **dadurch gekennzeichnet, dass** die AMR-Sensoren dreiachsige AMR-Kompasssensoren mit integriertem AD-Wandler und einem Messbereich bis 400 µT sind.

9. Vorrichtung nach einem der vorhergehenden Ansprüche, **dadurch gekennzeichnet, dass** die Sensoren (4) über einen I2C-Bus mit einem ebenfalls zur Vorrichtung gehörigen Mikrocontroller verbunden sind.

10. Vorrichtung nach Anspruch 9, **dadurch gekennzeichnet, dass** der Mikrocontroller eingerichtet ist, per USB mit einem PC eine Verbindung einzugehen.

## Claims

1. A device for entering the absolute position and orientation of an input element (1) into a computer, the input element (1) containing two permanent magnets, the input element (1) being arranged so as to be freely movable in the effective range of sensors (4) which are likewise part of the device,
**characterised in that**
- the dipole moments of the two permanent magnets of the input element (1) are arranged in a non-collinear orientation to each other and
- the sensors (4) for measuring the magnetic flux density of the field generated by the two permanent magnets are arranged in two mutually orthogonal planes (5, 6), at least three sensors (4) being arranged in each plane (5 or 6).

2. The device according to claim 1, **characterised in that** the two permanent magnets are designed as bar magnets or as ball magnets (2, 3).

3. The device according to claim 2, **characterised in that** the two bar magnets or ball magnets (2, 3) are arranged parallel, antiparallel or orthogonal to each other.

4. The device according to claim 3, **characterised in that** the distance between the bar magnets or ball magnets (2, 3) is at least twice the sum of the largest dimensions of the two bar magnets or ball magnets (2, 3).

5. The device according to claim 1, **characterised in that** the input element (1) has the size and shape of a tennis ball.

6. The device according to claim 1, **characterised in that** the sensors (4) are arranged evenly distributed in the two planes (5, 6).

7. The device according to claim 1, **characterised in that** the sensors (4) are AMR sensors.

8. The device according to claim 7, **characterised in that** the AMR sensors are triaxial AMR compass sensors with an integrated AD converter and a measuring range up to 400 µT.

9. The device according to any one of the preceding claims, **characterised in that** the sensors (4) are connected via an I2C bus to a microcontroller which is also part of the device.

10. The device according to claim 9, **characterised in that** the microcontroller is configured to connect to a PC via USB.

## Revendications

1. Dispositif d'entrée de position absolue et d'orientation d'un élément d'entrée (1) dans un ordinateur, l'élément d'entrée (1) contenant deux aimants permanents, l'élément d'entrée (1) étant disposé de manière à être librement mobile dans la zone d'action de capteurs (4) appartenant également au dispositif,
**caractérisé en ce que**
- les moments dipolaires des deux aimants permanents de l'élément d'entrée (1) sont disposés selon une orientation non colinéaire l'un par rapport à l'autre et
- les capteurs (4) destinés à mesurer la densité de flux magnétique du champ généré par les deux aimants permanents sont disposés dans deux plans (5, 6) orthogonaux entre eux, au moins trois capteurs (4) étant disposés dans chaque plan (5 ou 6).

2. Dispositif selon la revendication 1, **caractérisé en ce que** les deux aimants permanents sont réalisés sous forme d'aimants en barre ou d'aimants en boule (2, 3).

3. Dispositif selon la revendication 2, **caractérisé en ce que** les deux aimants en barre ou en boule (2, 3) sont disposés parallèlement, antiparallèlement ou orthogonalement l'un par rapport à l'autre.

4. Dispositif selon la revendication 3, **caractérisé en ce que** la distance entre les aimants en barre ou en boule (2, 3) est au moins le double de la somme des plus grandes dimensions des deux aimants en barre ou en boule (2, 3).

5. Dispositif selon la revendication 1, **caractérisé en ce que** l'élément d'entrée (1) a la taille et la forme d'une balle de tennis.

6. Dispositif selon la revendication 1, **caractérisé en ce que** les capteurs (4) sont disposés de manière uniformément répartie dans les deux plans (5, 6).

7. Dispositif selon la revendication 1, **caractérisé en ce que** les capteurs (4) sont des capteurs AMR.

8. Dispositif selon la revendication 7, **caractérisé en ce que** les capteurs AMR sont des capteurs compas AMR triaxiaux avec un convertisseur AD intégré et une plage de mesure allant jusqu'à 400 µT.

9. Dispositif selon l'une quelconque des revendications précédentes, **caractérisé en ce que** les capteurs (4) sont connectés via un bus I2C à un microcontrôleur appartenant également au dispositif.

10. Dispositif selon la revendication 9, **caractérisé en ce que** le microcontrôleur est adapté pour se connecter à un PC via USB.
